# EUROPEAN PATENT SPECIFICATION

(11) **EP 3 316 440 B1**
(45) Date of publication and mention of the grant of the patent: **10.03.2021**
(21) Application number: 16195670.1
(22) Date of filing: 26.10.2016
(51) Int. Cl.: H02J 7/00, B60L 58/22, H01M 10/42

(54) **BATTERY SYSTEM WITH INTEGRATED BALANCING AND METHOD FOR BALANCING A BATTERY SYSTEM**
BATTERIESYSTEM MIT INTEGRIERTEM AUSGLEICH UND VERFAHREN ZUM AUSGLEICH EINES BATTERIESYSTEMS
SYSTÈME DE BATTERIE AVEC ÉQUILIBRAGE INTÉGRÉ ET PROCÉDÉ D'ÉQUILIBRAGE D'UN SYSTÈME DE BATTERIE

(43) Date of publication of application: 02.05.2018
(73) Proprietor: Samsung SDI Co., Ltd., Giheung-gu Yongin-si, Gyeonggi-do 17084 (KR)
(72) Inventor: Hofer, Maximilian, 8230 Hartberg (AT); Korherr, Thomas, 8230 Hartberg (AT)
(74) Representative: Gulde & Partner

(56) References cited:
- US-A- 6 150 795
- US-A1- 2002 167 291
- US-A1- 2005 151 509
- US-A1- 2010 253 286

## Description

### Field of the Invention

The present invention relates to a battery system with integrated balancing and to a method for balancing such battery system.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle. One or more battery modules are mechanically and electrically integrated, equipped with a thermal management system and set up for communication with one or more electrical consumers in order to form a battery system.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. The battery management functions can then be at least partially realized on either module or submodule level and thus interchangeability can be improved. One or more battery modules are mechanically and electrically integrated, equipped with a thermal management system and set up for communication with one or more electrical consumers in order to form a battery system.

The mechanical integration of a battery system requires appropriate mechanical connection of the individual components, e.g. of battery submodules among themselves and with structures of a system providing the electrical consumers, e.g. a vehicle. These connections must be designed to remain functional and save during the average service life of the battery system and under the stresses provided during use of the consumers. Further, installation space and interchangeability requirements must be met, especially in mobile applications.

Mechanical integration of battery modules can be achieved by providing a carrier plate, e.g. ground plate, and by positioning individual battery cells or submodules thereon. Fixing the battery cells or submodules can be achieved by fitted depressions in the carrier plate, by mechanical interconnectors as bolts or screws or by confining the cells or submodules. Confinement can be achieved by fastening side plates to lateral sides of the carrier plate and/or by providing a further carrier plate atop and fixing it to the first carrier plate and/or side plates. Thus, multilevel battery modules can be constructed, wherein the carrier plates and/or side plates may contain coolant ducts for providing cooling of the cells or submodules.

Mechanical integration of battery submodules can be achieved by providing mechanically reinforced electrical connectors or by fastening the battery cells onto carrier beams or struts additionally to the electrical connectors. Additionally or alternatively the submodules can be arranged in individual casings covering some or all of the surfaces of a battery submodule and arranged into a battery module, e.g. onto a carrier plate, within these individual casings.

To provide electrical integration of a battery system in modular designs either submodules with a plurality of cells connected in parallel are connected in series (*XsYp*) or submodules with a plurality of cells connected in series are connected in parallel (*XpYs*)*. XsYp* type submodules can generate high voltages but the voltage level of each cell hast to be controlled individually and thus wiring complexity is increased. In *XpYs* type submodules the voltage levels of the cells connected in parallel are automatically balanced. Thus it is sufficient to control the voltage on submodule level and wiring complexity is reduced. In submodules of cells connected in parallel the capacitance of the cells add up and thus *XpYs* type submodules are mostly used for low capacitance cells.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned parameters a battery system usually comprises a battery management unit (BMU) and/or a battery management system (BMS). Such control units may be an integral part of the battery system and disposed within a common housing or may be part of a remote control unit communicating with the battery system via a suitable communication bus. In both cases, the control unit communicates with the electrical consumers via a suitable communication bus, e.g. a CAN or SPI interface.

Electronic components of vehicles are usually supplied via an electrical board system operating at voltage of 12 V. In order to provide compatibility of a battery system's BMU and/or BMS with an electric vehicle's electronic components, these control units are mostly operated at a voltage of 12 V. If the battery system is providing an output voltage other than 12 V and is supposed to supply the BMS and/or BMU the output voltage must be regulated.

US 2010/0253286 A1 discloses a battery system with integrated balancing, comprising all features of the preamble of claim 1, in particular: a battery stack with a plurality of battery cells connected in series between a first terminal and a second terminal and N balancing circuits connected between each pair of the plurality of battery cells and controlled by a PWM controller that is not supplied by any subset of the battery stack but by the battery stack as a whole. US 2002/0167291 A1 discloses a battery system with a plurality of cells connected in series, a DC-DC converter, a controller for controlling the DCDC converter, a high-voltage load and a low-voltage load. US 20050151509 A1 discloses a vehicle comprising a charging source, a first and second battery connected in series and to the output of the charging source, a DC/DC battery equalizer connected in parallel to the first and second battery, and a system controller for controlling the battery equalizer. US 6150795 A1 discloses a battery equalizer module battery equalizer module with a transformer having a primary and a secondary with the same number of turns, a controllable switching device connected in series with the primary, and a free-wheeling diode connected in series with the secondary winding.

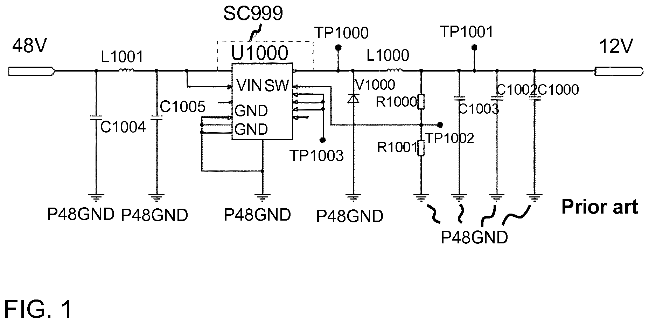

A prior art voltage regulator circuit electrically connected between a 48 V output of a battery system and a 12 V input of a connected electronic component is shown in Fig. 1. In this circuitry, the 48 V domain is electrically connected with the input VIN of buck converter chip U1000 and the output VOUT of buck converter chip U1000 is electrically connected with the 12 V domain, e.g. the input of a 12 V system basis chip.

In the circuitry of Fig. 1, a single point failure, e.g. a short circuit between VIN and VOUT as indicated by the dashed line SC999, could lead to supply of 48 V to the 12 V domain. The components of the 12 V domain may not work properly or may even be damaged due to such increased voltage. A malfunctioning system basis chip may further conduct an increased voltage to the CAN network and thus damage further electronic components electrically connected to the CAN. Further, the buck converter chip dissipates energy for regulating voltage. Thus, the power consumption of the battery system is increased due to its continuously operation. Further, the costs for buck converter chips are comparable high and their lifetime is comparable low, particularly if they are continuously operated.

It is thus an object of the present invention to provide an alternative for power supplying control electronics of a battery system, e.g. a BMS or BMU, by the battery system itself, particularly by a battery system with an output voltage of 48 V. Therein, the power supply shall not effect a misbalanced discharge of the battery cells, overvoltage protection shall be provided with respect to the control electronics and energy consumption and production costs of the power supply circuit shall be decreased compared to the prior art.

### Summary of Invention

One or more of the drawbacks of the prior art could be avoided or at least reduced by means of the present invention, i.e., by a battery system with integrated balancing according to the appended claims as well as by a method for balancing a battery system according to the appended claims.

In particular, according to a first aspect of the disclosure a battery system with integrated balancing is provided, comprising a plurality of battery cells that are electrically connected in series between a first terminal and a second terminal. The plurality of battery cells may further comprise battery cells connected in parallel between the first terminal and the second terminal. Exemplarily, a plurality of submodules, each comprising a plurality of cells connected in parallel, may be connected in series between the first terminal and the second terminal. In other words, the added voltage of all battery cells connected in series between the first terminal and the second terminal applies between the first terminal and the second terminal. Preferably, a voltage between 36 V and 52 V, particularly preferred of 48 V, applies between the first terminal and the second terminal of the battery system.

The battery system further comprises an intermediate node dividing the plurality of battery cells in a first subset of battery cells and a second subset of battery cells. In other words, the added voltage of all battery cells connected in series between the first terminal and the intermediate node applies between the first terminal and the intermediate node and the added voltage of all battery cells connected in series between the intermediate node and the second terminal applies between the intermediate node and the second terminal. Preferably, the first subset and the second subset of battery cells comprise the same amount of battery cells connected in series and the nominal output voltage of the first subset equals that of the second subset of battery cells. Further preferred, the first subset and the second subset comprise the same amount of battery cells connected in parallel. Particularly preferred, each subset comprises a half of the battery cells connected in series between the first terminal and the second terminal. Alternatively, the amount of battery cells connected in parallel and/or in series in the first subset differs from the amount of battery cells connected in parallel and/or in series in the second subset.

Further, a control unit is arranged in the battery system with a first supply node interconnected with the first terminal and a second supply node interconnected with the intermediate terminal. In other words, the control unit draws power from the first subset of battery cells. Thus, the control unit is supplied with a fraction of the total voltage of the battery system and thus overvoltage with respect to the control electronics is avoided. In a preferred embodiment, the intermediate node divides the plurality of battery cells such that the first subset of battery cells provides the operation voltage of the control unit. In other words, the operation voltage of the control unit preferably applies between the intermediate node and the first terminal. In a particularly preferred embodiment, the first subset supplies a voltage between 18 V and 26 V, preferably of 24 V. The control unit is configured to be safely supplied with a voltage between 18 V and 26 V, preferably of 24 V, although it is configured to communicate with a 12 V domain. Hence, the battery system of the present disclosure self-supplies its control unit without a buck converter chip and thus power losses and production costs of the battery system are lowered compared to the prior art. The control unit is preferably a battery management system and/or a battery management unit. Further, the control unit is configured for performing one or more of the method according to the invention.

The battery system according to the present disclosure further comprises a step-down converter that is connected in parallel with the plurality of battery cells between the first terminal and the second terminal. In other words a first input of the step-down converter is electrically connected with the first terminal, and preferably is on the same electric potential as the first terminal, and a second input of the step-down converter is electrically connected with the second terminal, and preferably is on the same electric potential as the second terminal. Further, an output of the step-down converter, i.e. a node to which the output voltage of the step-down converter is applied, is electrically connected with the intermediate node. This configuration allows for an active and/or passive balancing of the first subset and the second subset of battery cells. Therein, a voltage that that either exceeds or falls short of the voltage applied to the intermediate node is applied to the step-down converter's output. Thus, a current flows either into or out of the intermediate node and thus the first subset of battery cells becomes either less or more discharged. Thus, by controlling the output voltage of the step-down converter, the battery system is actively or passively balanced. Hence, due to the step-down converter supply of the control unit exclusively by the first subset of battery cells does not cause a persistent misbalance between the first and second subset of cells.

Further preferred, the battery system according to the disclosure comprises a plurality of intermediate nodes, a plurality of step-down converters and a plurality of loads, wherein each intermediate node is electrically connected to the output of one step-down converter and wherein each load is electrically connected between the first terminal and one intermediate node. Thus, each of the plurality of loads can be supplied with a matched operating voltage by connecting it to a matched subset of battery cells. Further, misbalancing of the different plurality of subset can be avoided by actively controlling the output voltage of each of the plurality of step down converters. Particularly preferred, the control unit is one of the plurality of loads and further preferred is configured to control one or more of the plurality of step-down converters.

In a preferred embodiment of the battery system according to the disclosure, the output of the step-down converter is electrically connected between the intermediate node and the second supply node. In other words, substantially the voltage of the first subset of battery cells is constantly supplied to the control unit. Particularly, any balancing current between the intermediate node and the output of the step-down converter does not cross the second supply node of the control node. Hence, these balancing currents do not affect the power supply of the control unit and thus overcurrent protection of the control unit is improved.

Further preferred, a shunt resistor is electrically connected between the output of the step-down converter and the intermediate node. Thus, any voltage difference between the intermediate node and the output of the step-down converter provides a current through the shunt resistor. The shunt can be either used for detecting this voltage difference and/or can be used as fuse for limiting the voltage difference. Preferably, the electrical resistance of the shunt resistance is accurately known. Particularly preferred, the control unit is configured to measure a voltage over the shunt resistor. Therefore, the control unit may comprise a first detection node connected between the intermediate node and the shunt resistor and a second detection node connected between the output of the step-down converter and the shunt resistor. The control unit comprises a first and second voltage detection inputs that are connected to the first and second detection node, respectively, and utilizes the detection nodes and inputs for measuring the voltage over the shunt resistor.

According to a further preferred embodiment of the battery system, the control unit is configured to control the duty cycle of the step-down converter. By controlling the duty cycle, the control unit can control the output power of the step-down converter by controlling the power fraction that is allowed to pass the step-down converter. Particularly preferred, the control unit is configured to control the duty cycle of the step-down converter based on the voltage measured over the shunt resistor. By controlling the duty cycle the control unit directly influences the voltage difference over the shunt resistor and thus can feedback control this voltage difference. Preferably, the control unit is configured to minimize the voltage difference over the shunt resistor in order to balance the voltage, i.e. the charging states, of the subsets.

In a preferred embodiment, the intermediate node divides the battery cells connected in series between the first terminal and the second terminal in two equal halves. Nominally the voltage applied between the intermediate node and the first terminal thus equals halve of the voltage applied between the first terminal and the second terminal. By setting the duty cycle of the step-down converter to 50 % the voltage applied to the output of the step-down converter is thus substantially equal to the voltage applied to the intermediate node. Thus, both subsets of battery cells are equally discharged and the battery system is balanced. By setting the duty cycle of the step-down converter to 30 % the voltage applied to the output of the step-down converter is smaller than the voltage applied to the intermediate node. Thus a current is flowing from the intermediate node to the output of the step-down converter and the first subset of cells is discharged more than the second subset of cells. By setting the duty cycle of the step-down converter to 70 % the voltage applied to the output of the step-down converter is larger than the voltage applied to the intermediate node. Thus a current is flowing from the output of the step-down converter to the intermediate node and the second subset of cells is discharged more than the first subset of cells. Thus, by setting the duty cycle of the step-down converter the subsets can be balanced. Therein, passive balancing occurs if the shunt resistor is dimensioned such that a considerably amount of energy is dissipated in the shunt resistor. By detecting the voltage over the shunt resistor the control unit can thus control the balancing of the battery system.

Particularly preferred, the step-down converter comprises a first switching element and an energy storage element electrically connected in series between the second terminal and the output of the step-down converter and further comprises a rectifying element electrically connected between the energy storage element and the first terminal. In other words, the step-down converter preferably is a buck converter, particularly if an inductance is used as an energy storage element. However, also a capacitor can be used as an energy storage element and hence in the connect of the present application also a charge pump nay be used as a step-down converter. However, as lower power losses may occur with an inductance as energy storage element, the use of an inductance is particularly preferred. However, preferably, the energy storage element is an inductance or a capacitance and the rectifying element is a diode that is configured to suppress a current from the energy storage element to the first terminal. By utilizing a diode as rectifying element passive balancing under control of the control unit can be easily performed as described above. Further, active switching means are reduced to a minimum and thus control effort and switching noise is reduced. The battery system according to this embodiment is simple and cost effective.

Alternatively preferred, the rectifying element is a second switching element and the control unit is configured for alternately setting one of the first switching element and the second switching element conductive and the other one of the first switching element and the second switching element non-conductive. The battery system of this embodiment allows for active balancing the first subset and the second subset of battery cells by transferring energy from one of the subsets to the energy storage element in a first configuration of the switching elements and subsequently transferring energy from the energy storage element to the other one of the subsets in a second configuration of the switching elements. Therein the second configuration of switching elements is reversed to the first configuration, i.e. the switching element that is conducting in the first configuration is non-conducting in the second configuration and vise versa.

According to another preferred embodiment, the battery system comprises an additional load that is electrically connected between the second terminal and the intermediate node. Further preferred, the ratio of the nominal power consumption of the control unit and the nominal power consumption of the additional load is substantially equal to the ratio of the nominal power production of the first subset of battery cells and the second subset of battery cells. In other words, the power consumption of the additional load in relation to the power production of the second subset substantially equals the power consumption of the control in relation to the power production of the first subset. Thus, the battery system is essentially balanced and the step-down converter of the battery system is relieved.

Further preferred, the additional load is a relay that is electrically connected in parallel with the plurality of battery cells between the first terminal and the second terminal and that is further electrically connected with the intermediate node. According to this embodiment, the battery system further comprises a third switching element that is electrically connected between the relay and the intermediate node and a fourth switching element that is electrically connected between the relay and the first terminal. Thus, the relay can be either powered using the voltage applied between the first and second terminal or using the voltage applied between the second terminal and the intermediate node. Particularly preferred, the voltage applied between the first and second terminal equals or exceeds the switching voltage of the relay and the voltage applied between the second terminal and the intermediate node equals or exceeds the holding voltage of the relay. Thus, a relay can be easily integrated in the battery system according to the present disclosure.

A second aspect of the disclosure relates to a method for balancing a battery system according to the present disclosure, wherein the output of the step-down converter is electrically connected between the intermediate node and the second supply node and wherein a shunt resistor is electrically connected between the output of the step-down converter and the intermediate node. The method comprises the steps of: (a) measuring the voltage difference between the intermediate node and the output of the step-down converter by the control unit over the shunt resistor and (b) setting the duty cycle of the step-down converter based on the measured voltage difference. This method allows for actively controlling the balancing of the subsets of battery cells, e.g. by discharging one of the subsets of cells via the shunt resistance.

For illustration purposes it is assumed that both subsets comprise an identic number of battery cells connected in series. Thus, the voltage applied to the intermediate node is half of the voltage between the first and second terminal. By setting the duty cycle of the buck converter to 50 % the voltage at the output of the buck converter should be essentially equal to the voltage of the intermediate node. If the subsets are however misbalanced, a voltage difference will be measured over the shunt resistor. If the first subset is discharged more than the second subset, the voltage at the converter output exceeds the voltage of the intermediate node and current flows into the intermediate node balancing the subsets.

Particularly preferred, the method further comprises the step of: (c) repeating the steps (a) and (b) until the measured voltage difference between the intermediate node and the output of the step-down converter over the shunt resistor becomes minimal. This minimal voltage difference can be set to be lower than a predetermined threshold or can be set to be zero. Further preferred, the battery system utilized in a method according to this embodiment comprises a diode as rectifying element.

A third aspect of the present disclosurerelates to a method for balancing a battery system as described above and further comprising a first switching element and an energy storage element electrically connected between the second terminal and the output of the step-down converter and a second switching element electrically connected between the energy storage element and the first terminal. The method according to this embodiment comprises the steps of: (a) setting the first switching element conductive and the second switching element non-conductive by the control unit for a first predetermined time period and transferring energy from the second subset of battery cells to the energy storage element and (b) setting the first switching element non-conductive and the second switching element conductive by the control unit for a second predetermined time period and transferring energy from the energy storage element to the first subset of battery cells. The method according to this embodiment thus allows for active balancing of the subsets of the battery system, i.e. for actively transferring energy from the second subset to the first subset with minimal or no energy being dissipated over the shunt resistance.

According to an alternative embodiment of the method for balancing a battery system as described above, the method comprises the steps of: (a) setting the first switching element non-conductive and the second switching element conductive by the control unit for a first predetermined time period and transferring energy from the first subset of battery cells to the energy storage element, and (b) setting the first switching element conductive and the second switching element non-conductive by the control unit for a second predetermined time period and transferring energy from the energy storage element to the second subset of battery cells. The method according to this embodiment thus allows for active balancing of the subsets of the battery system, i.e. to actively transfer energy from the first subset to the second subset with minimal or no energy being dissipated over the shunt resistance.

A fourth aspect of the present disclosurerelates to a method for balancing a battery system, comprising a relay as an additional load that is electrically connected between the second terminal and the intermediate node and that is electrically connected in parallel with the plurality of battery cells between the first terminal and the second terminal and that further comprises a third switching element that is electrically connected between the relay and the intermediate node and a fourth switching element that is electrically connected between the relay and the first terminal. The method according to this embodiment comprises the steps of: (a) setting the fourth switching element conductive and the third switching element non-conductive by the control unit for activating the relay, and (b) setting the third switching element conductive and the fourth switching element non-conductive by the control unit for holding the relay. Thus, in this method the voltage supplied by the plurality of battery cells is utilized for activating the relay and the voltage supplied by the second subset of battery cells is utilized for holding the relay.

Further preferred, the ratio of the nominal power consumption of the control unit and the nominal power consumption of the relay is substantially equal to the ratio of the nominal power production of the first subset and the second subset of battery cells. In other words, the battery system according to this embodiment is essentially balanced due to the comparable loads of the control unit and the relay once the third switching element is set conductive and the fourth switching element is set non-conductive. However, the method according to this embodiment may further comprise the steps of a method for balancing the battery system as described above for a further fine balancing of the battery system.

### Brief Description of the Drawings

Features will become apparent to those of ordinary skill in the art by describing in detail exemplary embodiments with reference to the attached drawings in which:
- Fig. 1: illustrates a schematic circuit diagram of a voltage regulator circuit electrically connected between a 48 V output of a battery system and a 12 V input of a connected electronic component;
- Fig. 2: illustrates a schematic circuit diagram of a battery system according to a first embodiment;
- Fig. 3: illustrates a schematic circuit diagram of a battery system according to a second embodiment; and
- Fig. 4: illustrates a schematic circuit diagram of a battery system according to a third embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element.

As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

Figure 1 has already been described while evaluating the state of the art in the introduction.

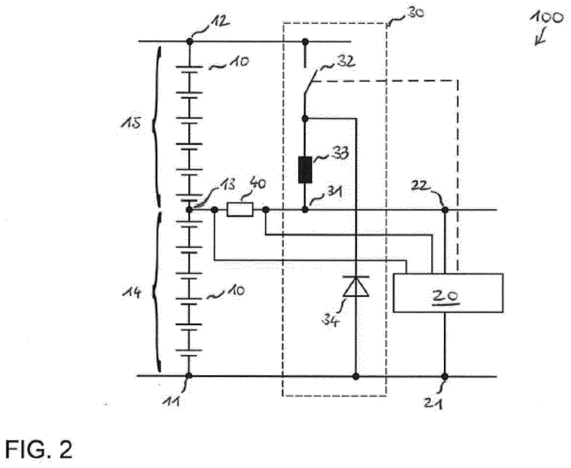

Figure 2 illustrates a schematic circuit diagram of a battery system 100 according to a first embodiment. The battery system 100 comprises a plurality of battery cells 10 that are connected in series between a first terminal 11 and a second terminal 12. The first terminal 11 is on ground potential, while the second terminal 12 is on the added potential of the battery cells 10 connected in series. The first terminal 11 is electrically connected with a first electric line shown as lower limitation of the battery system 100. The second terminal 12 is electrically connected with a second electric line shown as upper limitation of the battery system 100. The battery cells 10 are preferably Li ion battery cells 10, each providing a nominal voltage of approximately 3.7 V to 4.3 V. Thus, an overall voltage of approximately 36 V to 52 V applies between the first terminal 11 and the second terminal 12. The first and second electric lines may be electrical conductors as wires or conducting elements on a circuit carrier, e.g. a PCB, made of surface metallizations of printed conducting polymers.

An intermediate node 13 divides the plurality of battery cells in a first subset 14 of battery cells 10 and a second subset 15 of battery cells 10. Each of the subsets 14, 15 comprises six battery cells 10 connected in series. In other words, the intermediate node 13 is electrically connected between the cathode of an outermost cell 10 of the first subset 14 of cells 10 and the anode of an outermost cell 10 of the second subset 15 of cells 10. The intermediate node 13 is electrically connected with a third electric line that is shown as disposed between the first and second electric line in Fig. 1. A voltage of approximately 18 V to 26 V applies between the first terminal 11 and the intermediate node 13 and between the intermediate node 13 and the second terminal 12.

A control unit 20 comprises a first supply node 21 that is interconnected with the first terminal 11 and a second supply node 22 that is interconnected with the intermediate node 13. Thus, in principal the control unit 20 is electrically connected between the intermediate node 13 and the first terminal 11 and thus, in principal the voltage of the first subset 14 of battery cells 10 should apply to the control unit. However, electric elements arranged between the intermediate node 13 and the second supply node 22 or between the first terminal 11 and the first supply node 21 may cause voltage drops that lower the voltage applied to the control unit 20. In the battery system 100 of Fig. 2 only the shunt resistor 40 is electrically connected between the intermediate node 13 and the second supply node 22, wherein the electric resistance of shunt resistor 40 is rather small. Thus, an effective voltage of approximately 18 V to 26 V applies to the control unit 20. The control unit 20 comprises a battery management system and is configured to be operated at a 12 V voltage level. However, the applied voltages still allow for a secure operation of the control unit 20 and hazardous overvoltages do not occur at the control unit 20 of the battery system 100.

The battery system 100 further comprises a buck converter 30 as a step-down converter that is connected in parallel with the plurality of battery cells 10 between the first terminal 11 and the second terminal 12. A first input of the buck converter 30 is electrically connected with the first terminal 11 via the first electric line and a second input of the buck converter 30 is electrically connected with the second terminal 12 via the second electric line. The buck converter 30 comprises a first switching element 32 and an inductance 33 as energy storage element electrically connected in series between the second terminal 12 and an output 31 of the buck converter, particularly between the second input of the buck converter 30 and the output 31. The first switching element 32 is controlled by the control unit 20 as indicated by the dashed line shown in Fig. 2. The buck converter 30 further comprises a diode 34 as a rectifying element that is electrically connected between the inductance 33 and the first terminal 11. Particularly, the diode 34 is electrically connected between the first input of the converter 30 on the first electric line and a converter node that is electrically connected between the first switching element 32 and the inductance 33. Therein, the anode of the diode 34 is electrically connected with the first input of the converter 30 on the first electric line and the cathode of the diode 34 is electrically connected with the converter node.

The control unit 20 is configured to set the duty cycle D of the buck converter 30 by setting the opening times of the switching element 32 compared to the closing times of the switching element 32. The battery system 100 further comprises a shunt resistor 40 electrically connected between the intermediate node 13 and the output 31 of the converter 30. The control unit 20 is configured to measure the voltage drop over the shunt resistor 40 using a first detection node connected between the intermediate node 13 and shunt 40 and a second detection node connected between the shunt 40 and output 31. By measuring the voltage drop over the shunt 40, the control unit 20 determines, which of the subsets 14, 15 of cells 10 comprises a higher charge. The control unit 20 is further configured to set the duty cycle D based on the detected voltage difference over the shunt resistor 40.

Particularly the control unit 20 periodically opens and closes the switching element 32, wherein the duty cycle D is the fraction of the opening time of switching element 32 with respect to the period duration. Thus, a voltage Vₒᵤₜ applies to the output 31 of the buck converter 30 that is a fraction of the converters 30 input voltage Vᵢₙ that is the voltage between the first terminal 11 and the second terminal 12, wherein Vₒᵤₜ=D*Vᵢₙ. Thus, if the control unit 20 sets the duty cycle D of converter 30 to be 50 %, the voltage Vₒᵤₜ should be essentially equal to the voltage between the first terminal 11 and the intermediate node 13. Thus, no current should flow between the intermediate node 13 and the output 31. Is the duty cycle D set below 50 % current flows from intermediate node 13 to output 31 and is the duty cycle D set above 50 % current flows from output 31 to intermediate node 13. Thus, the control unit 20 can actively counteract a detected voltage difference over the shunt 40.

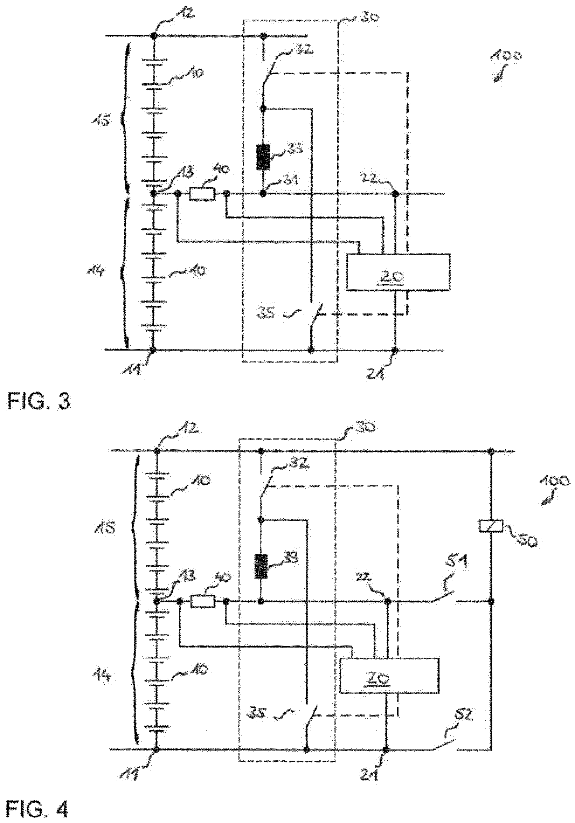

Figure 3 illustrates a schematic circuit diagram of a battery system 100 according to a second embodiment. The battery system 100 differs from the battery system as shown in Fig. 2 as the rectifying element of the buck converter 30 is realized as a second switching element 35. The second switching element 35 is controlled by the control unit 20 as indicated by the dashed line in Fig. 3. The embodiment of the battery system 100 as shown in Fig. 3 allows for an active charge transfer from the first subset 14 of battery cells 10 to the second subset 15 and vise versa. Thus, the battery system 100 according to this embodiment allows for an active balancing as well as for the controlled passive balancing by dissipating energy via the shunt resistor 40 as described above.

For performing active balancing, the control unit 20 controls the first switching element 32 to be conducting and the second switching element 35 to be non-conducting during a first time period. Thus, a current flows from the high potential at the second circuit line, i.e. from the second subset 15 of cells 10 and via the second terminal 12, towards the output 31. Hence, a magnetic field builds up in the inductance 33 and energy is stored in this magnetic field. The control unit 20 then controls the first switching element 32 to be non-conducting and the second switching element 35 to be conducting during a second time period subsequent to the first time period. The magnetic field in inductance 33 collapses, a voltage is induced and a current flows through the conducting second switching element 35 in the first electric line and via the first terminal 11 into the first subset of battery cells 14. Thus, energy is transferred from the second subset 15 of battery cells 10 to the first subset 14 of battery cells 10.

Alternatively, the control unit 20 controls the first switching element 32 to be non-conducting and the second switching element 35 to be conducting during a first time period. Thus, a current flows from the first circuit line, i.e. from the first subset 14 of cells 10 and via the first terminal 11, towards the output 31. Hence, a magnetic field builds up in the inductance 33 and energy is stored in this magnetic field. The control unit 20 then controls the first switching element 32 to be conducting and the second switching element 35 to be non-conducting during a second time period subsequent to the first time period. The magnetic field in inductance 33 collapses, a voltage is induced and a current flows through the conducting first switching element 32 in the second electric line and via the second terminal 12 into the second subset of battery cells 15. Thus, energy is transferred from the first subset 14 of battery cells 10 to the second subset 15 of battery cells 10.

Figure 4 illustrates a schematic circuit diagram of a battery system 100 according to a third embodiment. The battery system 100 differs from the battery system as shown in Fig. 3 as it comprises a relay 50 as an additional load. The relay 50 is electrically connected between the first terminal 11 and the second terminal 12, a third switching element 51 electrically connected between the relay 50 and the intermediate node 13 and a fourth switching element 52 is electrically connected between the first terminal 11 and the relay 50, particularly between the first supply node 21 and the relay 50. The relay 50 is further electrically connected between the second terminal 12 and the intermediate node 13, particularly between the second supply node 22 and the second terminal 12. The power consumption of the relay 50 is essentially equal to the power consumption of the control unit 20. Thus, by powering the control unit 20 via the first subset 14 of battery cells 10 and by powering the relay 50 by the second subset 15 of battery cells 10 the battery system 100 remains substantially balanced or at least misbalancing is reduced. For supplying the relay 50 by the second subset 15 of cells 10 the third switching element 51 is set conductive and the fourth switching element 52 is set non-conductive.

The battery system 100 of Fig. 4 further allows to power up the relay by 10 setting the third switching element 51 non-conductive and the fourth switching element 52 conductive in an initial state. Thus, the relay 50 is supplied by the plurality of battery cells 10. After the relay is initially activated the third switching element 51 is set conductive and the fourth switching element 52 is set non-conductive. Thus, the relay 50 is powered solely by the second subset 15 of battery cells 10, the power of which is sufficient for providing the holding current of the relay 50. Although in this operation state the battery system 100 remains substantially balanced, the control unit 20 may further actively balance the battery system by dissipating energy in the shunt resistance 40 or by transferring energy from one of the subsets 14, 15 to the other one of the subsets of battery cells 10.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices.

## Claims

1. Battery system (100) with integrated balancing, comprising
a plurality of battery cells (10) electrically connected in series between a first terminal (11) and a second terminal (12);
an intermediate node (13) dividing the plurality of battery cells (10) in a first subset (14) of battery cells (10) and a second subset (15) of battery cells (10);
a control unit (20) with a first supply node (21) and a second supply node (22); and
a converter (30) comprising an output (31), an inductance (33), a first switching element (32) and a rectifiying element (34, 35), wherein:
the first switching element (32) has a first end directly connected to the second terminal (12) and a second end directly connected to both a first end of the inductance (33) and a first end of the rectifying element (34, 35), the rectifying
element (34, 35) has a second end directly connected to the first terminal (11), the rectifying
element (34, 35) being either a second switching element (35) or a diode (34) whose anode corresponds to the second end of the rectifying
element (34, 35) as defined,
the inductance (33) has a second end directly connected to the output (31),
the output (31) is connected to the intermediate node (13); **characterized in that** the first supply node (21) and the second supply node (22) are directly connected to the first terminal (11) and the output (31) of the converter, respectively.

2. Battery system (100) according to claim 1, further comprising a shunt resistor (40) electrically connected between the output (31) of the converter (30) and the intermediate node (13).

3. Battery system (100) according to claim 2, wherein the control unit (20) is configured to measure a voltage over the shunt resistor (40).

4. Battery system (100) according to any one of the preceding claims, wherein the control unit (20) is configured to control the duty cycle of the converter (30).

5. Battery system (100) according to claims 3, wherein the control unit (20) is configured to control the duty cycle of the converter (30) based on the voltage measured over the shunt resistor (40).

6. Battery system (100) according to any one of the preceding claims, wherein the rectifying element is a diode (34) that is configured to suppress a current from the inductance (33) to the first terminal (11).

7. Battery system (100) according to any one of the preceding claims, wherein the rectifying element is a second switching element (35) and wherein the control unit (20) is configured for alternately setting one of the first switching element (32) and the second switching element (35) non-conductive and the other one of the first switching element (32) and the second switching element (35) conductive.

8. Battery system (100) according to any one of the preceding claims, further comprising an additional load (50) being electrically connected or connectable between the second terminal (12) and the intermediate node (13), wherein the ratio of the nominal power consumption of the control unit (20) and the nominal power consumption of the additional load (50) is substantially equal to the ratio of the nominal power production of the first subset (14) and the second subset (15) of battery cells (10).

9. Battery system (100) according to claim 8, wherein the additional load is a relay (50) having a first node and a second node, the battery system (100) further comprising a third switching element (51) and a fourth switching element (52), wherein the second node of the relay (50) is directly connected to the second terminal (12) and the first node of the relay is electrically connectable to either the intermediate node(13) or to the first terminal (11) through the third switching element (51) and the fourth switching element (52), respectively.

10. Battery system (100) according to any one of the preceding claims, wherein the control unit (20) is a battery management system and/or a battery management unit.

11. Method for balancing a battery system (100) according to claim 3, comprising the steps:
(a) measuring the voltage difference between the intermediate node (13) and the output (31) of the converter (30) by the control unit (20) over the shunt resistor (40); and
(b) setting the duty cycle of the converter (30) based on the measured voltage difference.

12. Method according to claim 11, further comprising the step:
(c) repeating steps (a) and (b) until the measured voltage difference between the intermediate node (13) and the output of the converter (30) over the shunt resistor (40) becomes minimal.

13. Method according to claim 11 or 12 for balancing a battery system (100) according to claim 7, further comprising the steps:
(a) setting the first switching element (32) conductive and the second switching element (35) non-conductive by the control unit (20) for a first predetermined time period and transferring energy from the second subset (15) of battery cells (10) to the inductance (33); and
(b) setting the first switching element (32) non-conductive and the second switching element (35) conductive by the control unit (20) for a second predetermined time period and transferring energy from the inductance (33) to the first subset (14) of battery cells (10).

14. Method according to claim 11 or 12 for balancing a battery system (100) according to claim 7, further comprising the steps:
(a) setting the first switching element (32) non-conductive and the second switching element (35) conductive by the control unit (20) for a first predetermined time period and transferring energy from the first subset (14) of battery cells (10) to the inductance (33); and
(b) setting the first switching element (32) conductive and the second switching element (35) non-conductive by the control unit (20) for a second predetermined time period and transferring energy from the inductance (33) to the second subset (15) of battery cells (10).

15. Method according to any one of the claims 11 to 14 for balancing a battery system (100) according to claim 9, comprising the steps:
(a) setting the fourth switching element (52) conductive and the third switching element (51) non-conductive by the control unit (20) for activating the relay (50); and
(b) setting the third switching element (51) conductive and the fourth switching element (52) non-conductive by the control unit (20) for holding the relay.

## Patentansprüche

1. Batteriesystem (100) mit integriertem Ausgleich, umfassend
mehrere Batteriezellen (10), die zwischen einem ersten Anschluss (11) und einem zweiten Anschluss (12) elektrisch in Reihe geschaltet sind;
einen Zwischenknoten (13), der mehrere Batteriezellen (10) in eine erste Teilmenge (14) von Batteriezellen (10) und eine zweite Teilmenge (15) von Batteriezellen (10) unterteilt;
eine Steuereinheit (20) mit einem ersten Versorgungsknoten (21) und einem zweiten Versorgungsknoten (22); und
einen Wandler (30), umfassend einen Ausgang (31), eine Induktivität (33), ein erstes Schaltelement (32) und ein Gleichrichterelement (34, 35), wobei:
das erste Schaltelement (32) ein erstes Ende aufweist, das direkt mit dem zweiten Anschluss (12) verbunden ist, und ein zweites Ende, das direkt sowohl mit einem ersten Ende der Induktivität (33) als auch mit einem ersten Ende des Gleichrichterelements (34, 35) verbunden ist,
das Gleichrichterelement (34, 35) ein zweites Ende aufweist, das direkt mit dem ersten Anschluss (11) verbunden ist, wobei das Gleichrichterelement (34, 35) entweder ein zweites Schaltelement (35) oder eine Diode (34) ist, deren Anode dem zweiten Ende des Gleichrichterelements (34, 35), wie definiert, entspricht,
die Induktivität (33) ein zweites Ende aufweist, das direkt mit dem Ausgang (31) verbunden ist, wobei der Ausgang (31) mit dem Zwischenknoten (13) verbunden ist;
**dadurch gekennzeichnet, dass**
der erste Versorgungsknoten (21) und der zweite Versorgungsknoten (22) direkt mit dem ersten Anschluss (11) und dem Ausgang (31) des Wandlers verbunden sind.

2. Batteriesystem (100) nach Anspruch 1, ferner umfassend einen Nebenschlusswiderstand (40), der elektrisch zwischen dem Ausgang (31) des Wandlers (30) und dem Zwischenknoten (13) verbunden ist.

3. Batteriesystem (100) nach Anspruch 2, wobei die Steuereinheit (20) konfiguriert ist, um eine Spannung über dem Nebenschlusswiderstand (40) zu messen.

4. Batteriesystem (100) nach einem der vorhergehenden Ansprüche, wobei die Steuereinheit (20) konfiguriert ist, um das Tastverhältnis des Wandlers (30) zu steuern.

5. Batteriesystem (100) nach Anspruch 3, wobei die Steuereinheit (20) konfiguriert ist, um das Tastverhältnis des Wandlers (30) basierend auf der über dem Nebenschlusswiderstand (40) gemessenen Spannung zu steuern.

6. Batteriesystem (100) nach einem der vorhergehenden Ansprüche, wobei das Gleichrichterelement eine Diode (34) ist, die konfiguriert ist, um einen Strom von der Induktivität (33) zu dem ersten Anschluss (11) zu unterdrücken.

7. Batteriesystem (100) nach einem der vorhergehenden Ansprüche, wobei das Gleichrichterelement ein zweites Schaltelement (35) ist und wobei die Steuereinheit (20) konfiguriert ist, um abwechselnd eines von dem ersten Schaltelement (32) und dem zweiten Schaltelement (35) nichtleitend und das andere von dem ersten Schaltelement (32) und dem zweiten Schaltelement (35) leitend einzustellen.

8. Batteriesystem (100) nach einem der vorhergehenden Ansprüche, ferner umfassend eine zusätzliche Last (50), die zwischen dem zweiten Anschluss (12) und dem Zwischenknoten (13) elektrisch verbunden oder verbindbar ist, wobei das Verhältnis der Nennleistungsaufnahme der Steuereinheit (20) und der Nennleistungsaufnahme der zusätzlichen Last (50) im Wesentlichen gleich dem Verhältnis der Nennleistungserzeugung der ersten Teilmenge (14) und der zweiten Teilmenge (15) von Batteriezellen (10) ist.

9. Batteriesystem (100) nach Anspruch 8, wobei die zusätzliche Last ein Relais (50) mit einem ersten Knoten und einem zweiten Knoten ist, wobei das Batteriesystem (100) ferner ein drittes Schaltelement (51) und ein viertes Schaltelement (52) umfasst, wobei der zweite Knoten des Relais (50) direkt mit dem zweiten Anschluss (12) verbunden ist und der erste Knoten des Relais entweder mit dem Zwischenknoten (13) oder mit dem ersten Anschluss (11) über jeweils das dritte Schaltelement (51) und das vierte Schaltelement (52) elektrisch verbindbar ist.

10. Batteriesystem (100) nach einem der vorhergehenden Ansprüche, wobei die Steuereinheit (20) ein Batteriemanagementsystem und/oder eine Batteriemanagementeinheit ist.

11. Verfahren zum Ausgleich eines Batteriesystems (100) nach Anspruch 3, umfassend die Schritte:
(a) Messen der Spannungsdifferenz zwischen dem Zwischenknoten (13) und dem Ausgang (31) des Wandlers (30) durch die Steuereinheit (20) über den Nebenschlusswiderstand (40); und
(b) Einstellen des Tastverhältnisses des Wandlers (30) auf der Grundlage der gemessenen Spannungsdifferenz.

12. Verfahren nach Anspruch 11, ferner umfassend den Schritt:
(c) Wiederholen der Schritte (a) und (b), bis die gemessene Spannungsdifferenz zwischen dem Zwischenknoten (13) und dem Ausgang des Wandlers (30) über den Nebenschlusswiderstand (40) auf ein Minimum sinkt.

13. Verfahren nach Anspruch 11 oder 12, zum Ausgleich eines Batteriesystems (100) nach Anspruch 7, ferner umfassend die Schritte:
(a) Einstellen des ersten Schaltelements (32) auf leitend und des zweiten Schaltelements (35) auf nichtleitend durch die Steuereinheit (20) für eine erste vorbestimmte Zeitspanne und Übertragen von Energie von der zweiten Teilmenge (15) von Batteriezellen (10) auf die Induktivität (33); und
(b) Einstellen des ersten Schaltelements (32) auf nichtleitend und des zweiten Schaltelements (35) auf leitend durch die Steuereinheit (20) für eine zweite vorbestimmte Zeitspanne und Übertragen von Energie von der Induktivität (33) zu der ersten Teilmenge (14) von Batteriezellen (10).

14. Verfahren nach Anspruch 11 oder 12 zum Ausgleich eines Batteriesystems (100) nach Anspruch 7, ferner umfassend die Schritte:
(a) Einstellen des ersten Schaltelements (32) auf nichtleitend und des zweiten Schaltelements (35) auf leitend durch die Steuereinheit (20) für eine erste vorbestimmte Zeitspanne und Übertragen von Energie von der ersten Teilmenge (14) von Batteriezellen (10) an die Induktivität (33); und
(b) Einstellen des ersten Schaltelements (32) auf leitend und des zweiten Schaltelements (35) auf nichtleitend durch die Steuereinheit (20) für eine zweite vorbestimmte Zeitspanne und Übertragen von Energie von der Induktivität (33) zu der zweiten Teilmenge (15) von Batteriezellen (10) .

15. Verfahren nach einem der Ansprüche 11 bis 14 zum Ausgleich eines Batteriesystems (100) nach Anspruch 9, umfassend die Schritte:
(a) Einstellen des vierten Schaltelements (52) auf leitend und des dritten Schaltelements (51) auf nichtleitend durch die Steuereinheit (20) zum Aktivieren des Relais (50); und
(b) Einstellen des dritten Schaltelements (51) auf leitend und des vierten Schaltelements (52) auf nichtleitend durch die Steuereinheit (20) zum Halten des Relais.

## Revendications

1. Système de batterie (100) avec équilibrage intégré, comprenant
une pluralité d'éléments de batterie (10) électriquement connectés en série entre une première borne (11) et une seconde borne (12) ;
un nœud intermédiaire (13) divisant la pluralité d'éléments de batterie (10) en un premier sous-ensemble (14) d'éléments de batterie (10) et un second sous-ensemble (15) d'éléments de batterie (10) ;
une unité de commande (20) ayant un premier nœud d'alimentation (21) et un second nœud d'alimentation (22) ; et
un convertisseur (30) comprenant une sortie (31), une inductance (33), un premier élément de commutation (32) et un élément de redressement (34, 35), où :
le premier élément de commutation (32) possède une première extrémité directement connectée à la seconde borne (12) et une seconde extrémité directement connectée à la fois à une première extrémité de l'inductance (33) et à une première extrémité de l'élément de redressement (34, 35),
l'élément de redressement (34, 35) possède une seconde extrémité directement connectée à la première borne (11), l'élément de redressement (34, 35) étant soit un deuxième élément de commutation (35) soit une diode (34) dont l'anode correspond à la seconde extrémité de l'élément de redressement (34, 35) tel que défini,
l'inductance (33) possède une seconde extrémité directement connectée à la sortie (31),
la sortie (31) est connectée au nœud intermédiaire (13) ;
**caractérisé en ce que** le premier nœud d'alimentation (21) et le second nœud d'alimentation (22) sont directement connectés à la première borne (11) et à la sortie (31) du convertisseur, respectivement.

2. Système de batterie (100) selon la revendication 1, comprenant en outre une résistance de dérivation (40) électriquement connectée entre la sortie (31) du convertisseur (30) et le nœud intermédiaire (13).

3. Système de batterie (100) selon la revendication 2, dans lequel l'unité de commande (20) est configurée pour mesurer une tension aux bornes de la résistance de dérivation (40).

4. Système de batterie (100) selon l'une quelconque des revendications précédentes, dans lequel l'unité de commande (20) est configurée pour commander le rapport cyclique du convertisseur (30).

5. Système de batterie (100) selon la revendication 3, dans lequel l'unité de commande (20) est configurée pour commander le rapport cyclique du convertisseur (30) sur la base de la tension mesurée aux bornes de la résistance de dérivation (40).

6. Système de batterie (100) selon l'une quelconque des revendications précédentes, dans lequel l'élément de redressement est une diode (34) qui est configurée pour supprimer un courant de l'inductance (33) à la première borne (11).

7. Système de batterie (100) selon l'une quelconque des revendications précédentes, dans lequel l'élément de redressement est un deuxième élément de commutation (35) et dans lequel l'unité de commande (20) est configurée pour rendre alternativement l'un du premier élément de commutation (32) et du deuxième élément de commutation (35) non conducteur et l'autre du premier élément de commutation (32) et du deuxième élément de commutation (35) conducteur.

8. Système de batterie (100) selon l'une quelconque des revendications précédentes, comprenant en outre une charge supplémentaire (50) qui est électriquement connectée ou apte à être électriquement connectée entre la seconde borne (12) et le nœud intermédiaire (13), où le rapport de la consommation d'énergie nominale de l'unité de commande (20) et de la consommation d'énergie nominale de la charge supplémentaire (50) est sensiblement égal au rapport de la production d'énergie nominale du premier sous-ensemble (14) et du second sous-ensemble (15) d'éléments de batterie (10).

9. Système de batterie (100) selon la revendication 8, dans lequel la charge supplémentaire est un relais (50) ayant un premier nœud et un second nœud, le système de batterie (100) comprenant en outre un troisième élément de commutation (51) et un quatrième élément de commutation (52), où le second nœud du relais (50) est directement connecté à la seconde borne (12) et le premier nœud du relais est apte à être électriquement connecté soit au nœud intermédiaire (13) soit à la première borne (11) par l'intermédiaire du troisième élément de commutation (51) et du quatrième élément de commutation (52), respectivement.

10. Système de batterie (100) selon l'une quelconque des revendications précédentes, dans lequel l'unité de commande (20) est un système de gestion de batterie et/ou une unité de gestion de batterie.

11. Procédé d'équilibrage d'un système de batterie (100) selon la revendication 3, comprenant les étapes consistant à :
(a) mesurer la différence de tension entre le nœud intermédiaire (13) et la sortie (31) du convertisseur (30) par l'unité de commande (20) aux bornes de la résistance de dérivation (40) ; et
(b) régler le rapport cyclique du convertisseur (30) sur la base de la différence de tension mesurée.

12. Procédé selon la revendication 11, comprenant en outre l'étape consistant à :
(c) répéter les étapes (a) et (b) jusqu'à ce que la différence de tension mesurée entre le nœud intermédiaire (13) et la sortie du convertisseur (30) aux bornes de la résistance de dérivation (40) devienne minimale.

13. Procédé selon la revendication 11 ou 12 d'équilibrage d'un système de batterie (100) selon la revendication 7, comprenant en outre les étapes consistant à :
(a) rendre le premier élément de commutation (32) conducteur et le deuxième élément de commutation (35) non conducteur par l'unité de commande (20) pendant une première durée prédéterminée et transférer de l'énergie du second sous-ensemble (15) d'éléments de batterie (10) à l'inductance (33) ; et
(b) rendre le premier élément de commutation (32) non conducteur et le deuxième élément de commutation (35) conducteur par l'unité de commande (20) pendant une seconde durée prédéterminée et transférer de l'énergie de l'inductance (33) au premier sous-ensemble (14) d'éléments de batterie (10).

14. Procédé selon la revendication 11 ou 12 d'équilibrage d'un système de batterie (100) selon la revendication 7, comprenant en outre les étapes consistant à :
(a) rendre le premier élément de commutation (32) non conducteur et le deuxième élément de commutation (35) conducteur par l'unité de commande (20) pendant une première durée prédéterminée et transférer de l'énergie du premier sous-ensemble (14) d'éléments de batterie (10) à l'inductance (33) ; et
(b) rendre le premier élément de commutation (32) conducteur et le deuxième élément de commutation (35) non conducteur par l'unité de commande (20) pendant une seconde durée prédéterminée et transférer de l'énergie de l'inductance (33) au second sous-ensemble (15) d'éléments de batterie (10).

15. Procédé selon l'une quelconque des revendications 11 à 14 d'équilibrage d'un système de batterie (100) selon la revendication 9, comprenant les étapes consistant à :
(a) rendre le quatrième élément de commutation (52) conducteur et le troisième élément de commutation (51) non conducteur par l'unité de commande (20) pour activer le relais (50) ; et
(b) rendre le troisième élément de commutation (51) conducteur et le quatrième élément de commutation (52) non conducteur par l'unité de commande (20) pour bloquer le relais.
